# EUROPEAN PATENT SPECIFICATION

(11) **EP 1 298 660 B1**
(45) Date of publication and mention of the grant of the patent: **16.12.2009**
(21) Application number: 02026965.0
(22) Date of filing: 20.04.1999
(51) Int. Cl.: G11B 20/18

(54) **Apparatus for managing defects and recording data to a recording medium**
Vorrichtung zum Fehlermanagement und zum Aufzeichnen von Daten auf einem Aufzeichnungsmedium
Appareil pour gérer des défauts et pour enregistrer des données sur un support d'enregistrement

(30) Priority: 20.04.1998 KR 9814059; 24.06.1998 KR 9823913; 23.07.1998 KR 9829733; 27.08.1998 KR 9834880; 01.09.1998 KR 9835847
(43) Date of publication of application: 02.04.2003
(62) Divisional of application: 99303057.6
(73) Proprietor: SAMSUNG ELECTRONICS CO., LTD., Suwon-City, Kyungki-do (KR)
(72) Inventor: Ko, Jung-wan,, Paldal-gu, Suwon-si, Gyeonggi-do 442-470 (KR)
(74) Representative: Robinson, Ian Michael

(56) References cited:
- EP-A- 0 383 298
- EP-A- 0 798 716
- WO-A-98/14938
- US-A- 5 528 571
- ECMA : STANDARDIZING INFORMATION AND COMMUNICATION SYSTEMS: "Standard ECMA-272 : 120 mm DVD Rewritable Disk (DVD-RAM)" February 1998 (1998-02) XP002114221 * page 43-51 *

## Description

The present invention relates to the field of managing a disk and its defects, and more particularly, to a recording medium for storing defect management information with respect to whether linear replacement is used, a method of effectively managing defects to record and/or reproduce video and/or audio data from a digital versatile disc random access memory (DVD-RAM) in real time, and a method of recording data in real time using defect management information.

Real time recording or reproduction means that a given amount of data is necessarily recorded or reproduced within a given time since input information is lost if it is not processed at the moment data is input, and since a phenomenon such as pause of an image or temporary interruption of music occurs with reproduction of data as abnormal information if data is not recorded or reproduced at a predetermined speed. The above-described problems are caused since the input of information cannot be temporally controlled by a recording and reproducing apparatus.

In the DVD-RAM standard version 1.0, a method of managing defects generated on a disk has been disclosed to increase the reliability of data recorded on the disk. Slipping replacement and linear replacement are included as the disclosed defect management method: the first method processes defects detected in an initializing process; and the second method replaces an error correction code (ECC) block unit (16-sector unit) including a sector having a defect generated during use of the disc with a defect-free ECC block in a spare area.

The slipping replacement is used to minimize a reduction in the recording or reproduction speed due to defects, in which a logical sector number to be provided to a defective sector is provided to a sector next to the defective sector detected during a certification process for investigating defects of a disc when the disc is initialized, that is, data is recorded or reproduced by slipping a sector on which a defect is generated during recording or reproduction. Here, a real physical sector number is pushed back by the sector number designated by slipping the defective sector. Such a left-behind phenomenon is solved by using as many sectors as there are defects in a spare area located at the end portion of a corresponding recording area.

However, the slipping replacement cannot be used for a defect generated while a disc is used. When a defective portion is disregarded and skipped, discontinuity is generated on logical sector numbering, which means that the slipping replacement violates file system rules. Thus, the linear replacement is used when a defect is generated during use of the disc, which means the replacement of an ECC block including a defective sector with an ECC block existing in a spare area.

When the linear replacement is used, no vacuum exists in a logical sector number, however, the position of a sector on a disc is discontinuous, and real data corresponding to a defective ECC block exists in the spare area.

As described above, when real time recording, in which the time for temporarily-input information cannot be arbitrarily delayed, such as, recording of broadcast information or a real image, is necessary, information is recorded in an area to be linearly-replaced by undergoing a process in which a real pickup goes up to the spare area and searches for an area to be linearly replaced, and a process in which the real pickup comes back. Hence, the recording speed is reduced, so that information input in real time cannot be continuously recorded when the linear replacement is used.

It is prescribed that a DVD-RAM drive according to the DVD-RAM standard version 1.0 processes all of this defect management to reduce the burden of the host computer used in the drive. The host computer is designed to transmit a command ordered not to manage defects to the drive using a command denoted in an interface standard. That is, if the host computer determines whether defect management will be performed, the defect management itself is supposed to be performed by the drive.

Even when the host computer does not manage defects according to the need of an application program, the DVD-RAM disc according to the DVD-RAM standard version 1.0 must necessarily manage defects recorded in a primary defect list (PDL) and a secondary defect list (SDL) according to a defect management rule if an area slipping replaced or linear replaced due to defect management performed by another drive exists. Here, it is prescribed that the position of a defective sector replaced according to slipping replacement should be recorded in the PDL, and the position of a defective block replaced according to linear replacement should be recorded in the SDL. That is, when data is recorded after setting the fact that a specific drive should not perform defect management using the linear replacement, it cannot be ensured that other drives must also not perform the linear replacement on the same disc.

Therefore, when real time recording is performed by a current DVD-RAM disc, it may be difficult because of an area to be used by the linear replacement.

US 5,528,571 describes a disc driving apparatus using SSA (Sector Slipping Algorithm) for defective sectors and LRA (Linear Replacement Algorithm). The disc driving apparatus can reproduce data at high speed on the basis of attribute data representing whether a defective sector is processed by the SSA or the LRA. This document forms the pre-characterising portion of the claims dependent hereto.

With a view to solve or reduce the above problems, it is an aim of embodiments of the present invention to provide a recording medium for storing defect management information associated with whether linear replacement is used or not, to record real time data.

It is another aim to provide a recording medium for storing information for showing a plurality of different defect management modes according to the type of data to be recorded.

It is still another aim to provide a recording medium for allocating a spare area for only real time recording whose space can be effectively utilized.

It is yet another aim to provide a method of managing a defect of a recording medium which can record real time data and can have maximum compatibility with a general DVD-RAM disc.

It is still yet another aim to provide a method of recording real time data using the defect management information associated with whether the linear replacement is used.

According to a first aspect of the invention, there is provided an apparatus for managing defects and recording data to a recording medium, the recording medium including at least a recording area, and a spare area, characterised in that the apparatus is arranged to read defect management information stored in, or record defect management information to, a control information area of the recording medium, the information representing whether replacement or non-replacement of a defective unit of the recording medium with the spare area by a linear replacement operation is required, wherein the apparatus is arranged not to replace the defective unit by linear replacement if the defective management information indicates non-replacement, even if the defective unit was previously designaled for linear replacement.

For a better understanding of the invention, and to show how embodiments of the same may be carried into effect, reference will now be made, by way of example, to the accompanying diagrammatic drawings, in which:
Figure 1 is a view for explaining a defect management method using slipping replacement of a recording medium;
Figure 2 is a view for explaining a defect management method using linear replacement of a recording medium;
Figure 3 is a table of a defect definition structure (DDS);
Figures 4A and 4B illustrate the structures of the disc certification flag and the group certification flag shown in Figure 3, respectively;
Figure 5 is a table of the contents of a secondary defect list (SDL);
Figure 6 illustrates the structure of the spare area full flag shown in Figure 5;
Figure 7 illustrates the structure of the SDL entry shown in Figure 5;
Figures 8A and 8B illustrate the structures of the disc certification flag and the group certification flag of the DDS for recording real time data proposed by embodiments of the present invention, respectively;
Figure 9 is a flowchart illustrating an embodiment of a method of recording data according to a defect management method of the present invention;
Figure 10 illustrates an example of the structure of an improved SDL entry for cancelling linear replacement as proposed by the present invention;
Figure 11 illustrates an example of a DDS for storing information for indicating a plurality of different defect management modes proposed by the present invention;
Figure 12 is a table showing allocated spare areas for recording real time data as proposed by embodiments of the present invention; and
Figure 13 illustrates a DDS and the structure of a primary defect list (PDL) for storing defect management mode information as proposed by embodiments of the present invention for allocating the spare areas for only real time recording shown in Figure 12.

Preferred embodiments of a recording medium storing defect management information for recording real time data, a defect managing method using the same, and a real time data recording method will now be described with reference to the attached drawings.

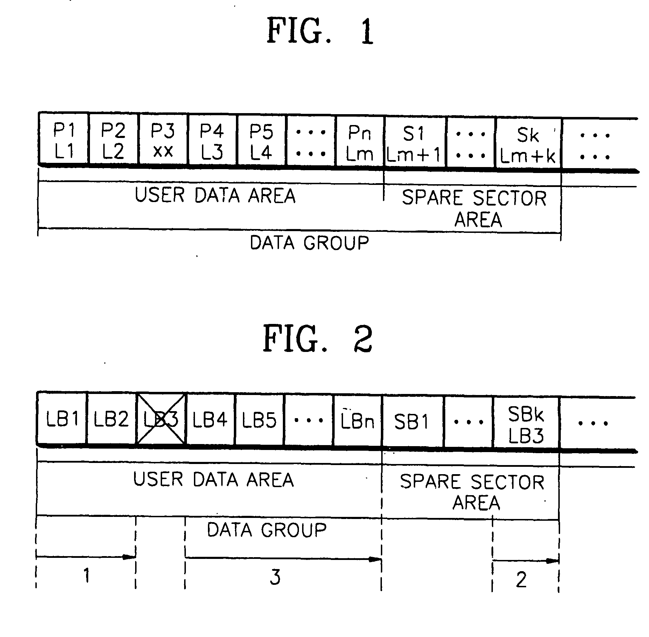

First, slipping replacement and linear replacement will be described in detail referring to Figures 1 and 2 in order to help in the understanding of the present invention.

Figure 1 is a view for explaining a defect management method using the slipping replacement. Physical addresses on a disc shown in Figure 1 are recorded as P1, P2, P3, ..., Pn, and logical addresses must be provided to record real data in this physically-segmented sector. These logical addresses act as addresses allowing a real file system to search for its own data. However, the relationship between the physical addresses and the logical addresses is made in a disc initialization process. If a defect is detected on the third physical sector P3 as shown in Figure 1, a logical address is not designated to this defective sector, and a logical sector number L3 is designated to the next physical sector P4. Then, the logical sectors are sequentially pushed back by the number of defective sectors, and a spare area located at the end of a corresponding data group is used by the pushed portion. In this slipping replacement method, effective processing in sector units is possible by simply slipping a defective region, and a pickup does not need to move to a different place upon recording and reproduction by simply

disregarding and skipping a defective portion. Thus, the defective region can be avoided while minimizing the delay time. Here, the position of a defective sector replaced by the slipping replacement is recorded in the PDL.

Figure 2 is a view for explaining a defect management method using linear replacement. In the linear replacement for processing defects generated while a disc is used after being initialized, the defects are managed in an ECC block unit, i.e., in units of 16 sectors. In other words, when an error is generated at a specific sector and a defect is thus detected, if the movement in units of at least 16 sectors is not made for error correction, the error correction unit of each data previously recorded in a disc must be changed. Thus, processing in an ECC block unit must be performed, and the slipping replacement method of slipping a defective sector and designating a logical sector cannot be used since the logical address of an area where data has already been recorded cannot be changed. When a defect is generated in a logical block LB3 as shown in Figure 2, the defective region is recorded in the SDL to be prevented from being used, and the defective portion is replaced with a usable block existing in a spare area. The replaced block (SBk in Figure 2) in the spare area has the same logical block number (LB3) as the erroneous block.

In a reproduction sequence, as shown in Figure 2, reading is continued just before to a defective block as in an area 1, a replaced ECC block existing in the spare area is read by moving a pickup or the like as in an area 2, and data is continuously read from a block right next to the defective block as in an area 3. In order to process defects as described above, pickup movement is caused such as a process for searching for data and a process for returning to the block right next to the defective block after reading the replaced block. Thus, much time is required to read or write data, so that this defect management is not appropriate for real time recording.

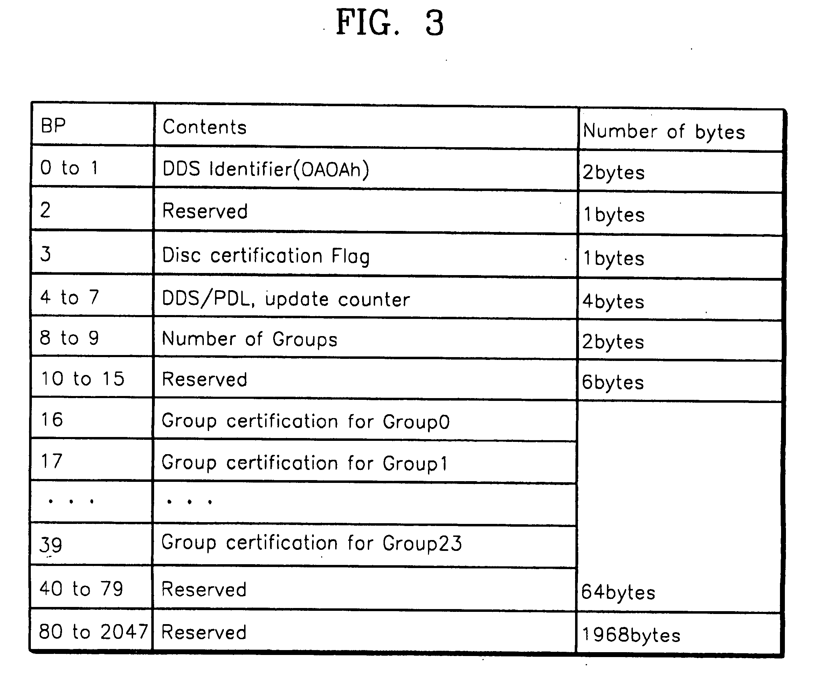

Figure 3 is a table of a disc definition structure (DDS) existing in a defect management area (DMA) of a DVD-RAM. In particular, a byte position (BP) 3, a disc certification flag, records the certified contents of the entire disc, and BPs 16 through 39, group certification flags, record the contents of certification of 24 data groups.

In addition, BPs 0 and 1 are DDS identifiers, and BPs 4 through 7 are the values of counters for updating DDS/PDL representing the total number of times in which a DDS/PDL block is updated and rewritten. That is, when initialization starts, the value of a counter is set to be "0", and increases by one whenever the DDS/PDL is updated or rewritten. All DDS/PDL and SDL blocks must have the same counter value after formatting is completed. BPs 8 and 9 denote the number of groups, and, for example, 24 groups are recorded as "0018" (hexadecimal).

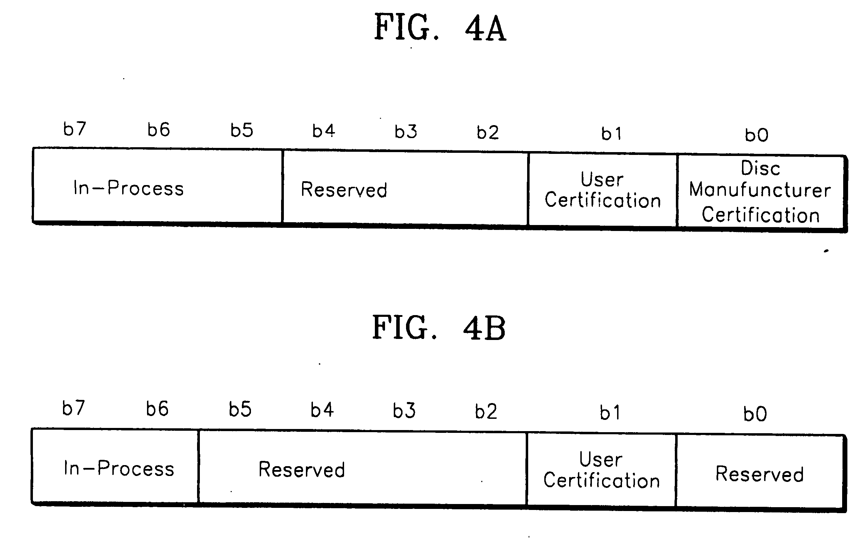

Figure 4A illustrates the structures of the disc certification flag shown in Figure 3. When a bit b7 among three bits b7, b6 and b5 representing an in-process state is "0b", it indicates format completion, and when the bit b7 is "1b", it indicates an under-formation state. When the bit b6 is "0b", it indicates the progress of formatting using full certification, and when the bit b6 is "1b", it indicates the progress of formatting using partial certification. When the bit b5 is "0b", it indicates the progress of formatting on the entire disc, and when the bit b5 is "1b", it indicates the progress of formatting on only groups, and indicates that the group certification flag is effective. When a bit b1 representing user certification is "0b", it indicates that a disc has never been certified by a user, and when the bit b1 is "1b", it indicates that a disc has been certified one or more times by a user. When a bit b0 representing disc manufacturer certification is "0b", it indicates that a disc has never been certified by a manufacturer, and when the bit 0 is "1b", it indicates that the disc has been certified one or more times by the manufacturer. Other bits b4, b3, and b2 are reserved. However, "in-process" is set to be "1xx" by any certification before formatting, and when formatting is completed, the "in-process" is.reset to be "000".

Figure 4B illustrates the structure of each of the group certification flags of the bit positions 16 through 39 shown in Figure 3. When a bit b7 among two bits b7 and b6 representing an in-process state is "0b", it indicates format completion of a corresponding group, and when the bit b7 is "1b", it indicates that the corresponding group is being formatted. When the bit b6 is "0b", it indicates that the group is being formatted using full certification, and when the bit b6 is "1b", it indicates that the group is being formatted using partial certification. When a bit b1 representing user certification is "0b", it indicates that the group has never been certified by a user, and when the bit b1 is "1b", it indicates that the group has been certified one or more times by a user. Other bits b5, b4, b3, b2, and b0 are reserved.

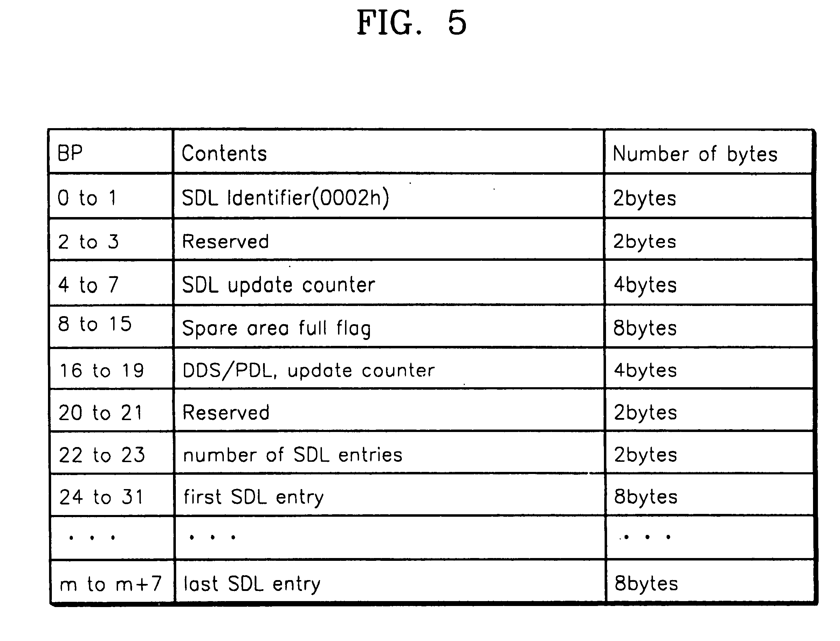

Figure 5 is a table showing the contents of a secondary defect list (SDL). RBP is the position of a relative byte starting with 0. Relative byte positions 0 and 1 are SDL identifiers, and relative byte positions 2 and 3 are reserved. Relative byte positions 4 through 7 denote the total number of updated SDL blocks, and SDL updating counter values increases by one whenever the content of SDL is updated. Relative byte positions 8 through 15 denote spare area full flags, and relative byte positions 16 through 19 denote DDS/PDL updating counter values each indicating the total number of times the DDS/PDL block is updated and rewritten. The counter value is set to be "0" when initialization starts, and increases by 1 whenever the DDS/PLD is updated or rewritten. As mentioned above, all the DDS/PDL and SDL blocks must have the same count value after formatting is finished. Relative byte positions 20 and 21 are reserved, and relative byte positions 22 and 23 indicate the number of entries in the SDL. The remaining relative byte positions indicate each SDL entry.

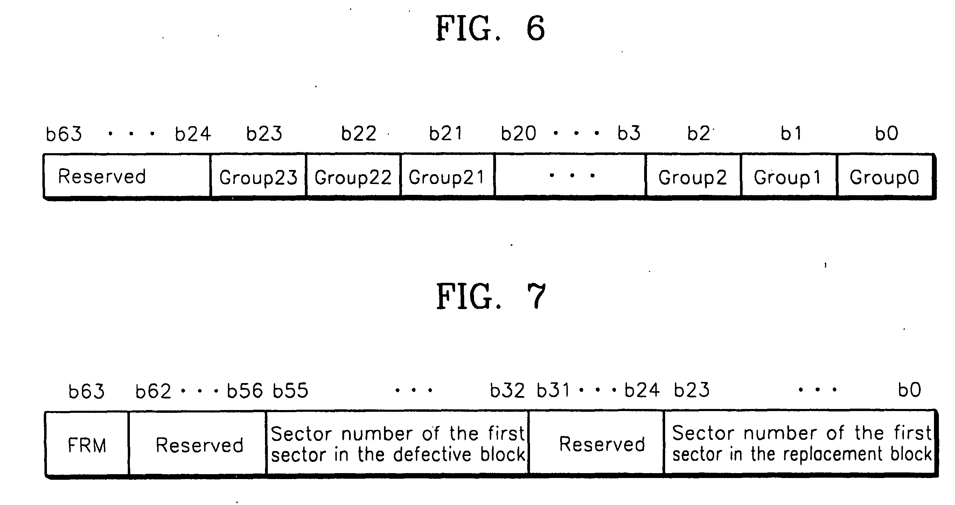

Figure 6 illustrates the structure of the spare area full flag of the relative byte positions 8 through 15 shown in Figure 5. In Figure 6, if a bit representing a corresponding group is "1", it indicates that no spare blocks are left in the corresponding group, and if the bit is "0", it indicates that a spare block remains in the corresponding group.

Figure 7 illustrates the structure of the SDL entry shown in Figure 5. In Figure 7, FRM is a bit representing whether a defective block has been replaced. When the defective block has been replaced, FRM records a binary "0", and when the defective block has not been replaced or no spare areas exist, FRM records a binary "1". The SDL entry includes the sector number of the first sector of a defective block, and the sector number of the first sector of a replacement block. Here, if the defective block has not been replaced, a hexadecimal "000000" is recorded in an area where the first sector number of the replacement block is recorded.

Meanwhile, in real time recording, whether corresponding data can be processed within a given time becomes more important than some errors of real data. In particular, in the case of an image or the like, an error is generated to part of a screen when a small error exists in the image. On the other hand, when input data cannot be processed in time, continuous data error is generated to make normal reproduction impossible. Therefore, the processing of data in time is more important.

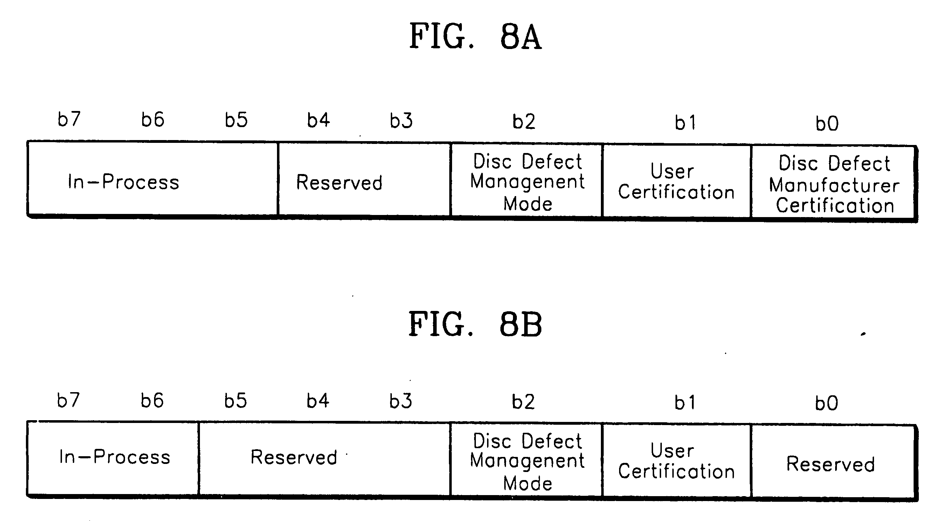

Thus, as for the real time recording, a method allowing non-use of the linear replacement must be suggested. When the linear replacement is not used, there must be a portion recording the fact that a corresponding disc is in use without using the linear replacement. A method of recording such a content will be described referring to Figures 8A and 8B.

Figures 8A and 8B illustrate the structures of the disc certification flag and the group certification flag of the DDS proposed by the present invention to record real time data, respectively. The structures of the disc certification flag and the group certification flag of Figures 8A and 8B are the same as those of Figures 4A and 4B except for a bit position b2. That is, as shown in Figure 8A, when the entire corresponding disc is used without the linear replacement, the bit position b2 of the disc certification flag is set as "1", and when the corresponding disc is used by the linear replacement as in the prior art, the bit position b2 is set as "0". In Figures 8A and 8B, information associated with use or non-use of the linear replacement stored in the bit position 2(b2) is called a disc defect management mode.

Also, when only specific groups are partially initialized to prevent the linear replacement, as shown in Figure 8B, the bit position 2(b2) of the group certification flag for a corresponding group is set as "1" to indicate that linear replacement is not performed on a data region in the corresponding group. In an embodiment of the present invention, the bit positions 2(b2) of the disc certification flag and the group certification flag are used as shown in Figures 8A and 8B, but another reserved bit can be used. Here, each existing b2 region is reserved, and its value is recorded as "0".

When the bit b2 for a disc defect management mode of the disc certification flag or group certification flag is set as "1" upon initialization of a disc, the SDL records only the start sector address of a block having a defect generated during use of the disc, records an FRM bit of the SDL entry as "1", and the linear replacement is not performed. A hexadecimal "000000" is recorded in an area for recording the first sector number of a replacement block of the SDL entry.

In this way, while compatibility between a defect managing method based on a current DVD-RAM standard and a method of the present invention is maintained, i.e., while a method capable of indicating the existence of nonlinearly-replaced blocks as in an existing defect managing method is suggested, a method allowing a defective block not to be linearly replaced is also provided to thereby accomplish recording and reproduction of real time data.

A determination of whether a defective region will be replaced by a block existing in a spare area using linear replacement is made by information associated with use or non-use of linear replacement defect management recorded in a defect management region on the entire disc or a specific area of the disc regardless of the type of data to be recorded in a corresponding area.

Also, a determination of whether a defective region will be replaced by a block existing in a spare area using the linear replacement is made by information associated with use or non-use of linear replacement defect management recorded in a defect management region on the entire disc or in a specific area on the disc in the case of only data required to be recorded in real time.

A method of preventing linear replacement with respect to the entire disc or a specific group of discs was described on the basis of the above-described embodiment. In another embodiment, when a disc defect management mode is set as "1", it can be used as information that the linear replacement is not performed with respect to a block having a defect in an area of a disc for recording information requiring real time recording and reproduction, but the linear replacement can be performed with respect to an area of a disc not requiring real time recording. In this case, when data not requiring real time recording has already been recorded in an area in which real time data must be recorded, and a defective region is thus linearly replaced, the linear replacement of the defective region must be capable of being cancelled. Therefore, when the disc defect management mode is set as "1", this can mean that the linear replacement of the defect can be cancelled when real time information is recorded.

In order to prevent entire linear replacement with respect to the entire disc or a given group on the disc, information associated with the disc defect management mode is set as "1" upon initialization. On the other hand, when linear replacement is not performed only in the case of recording real time data, there is no need to set the defect management mode information upon initialization. That is, when it is determined that there is a necessity for recording real time data in a disc, the disc defect management mode is set as "1" just before the real time data is recorded. At this time, a determination of whether a corresponding disc is suitable for recording real time data is made on the basis of the amount or distribution of a defect generated on the disc. When it is determined that the disc is suitable, the disc defect management mode is set as "1". Otherwise, a process for informing a user that the disc is not suitable for recording real time data is required.

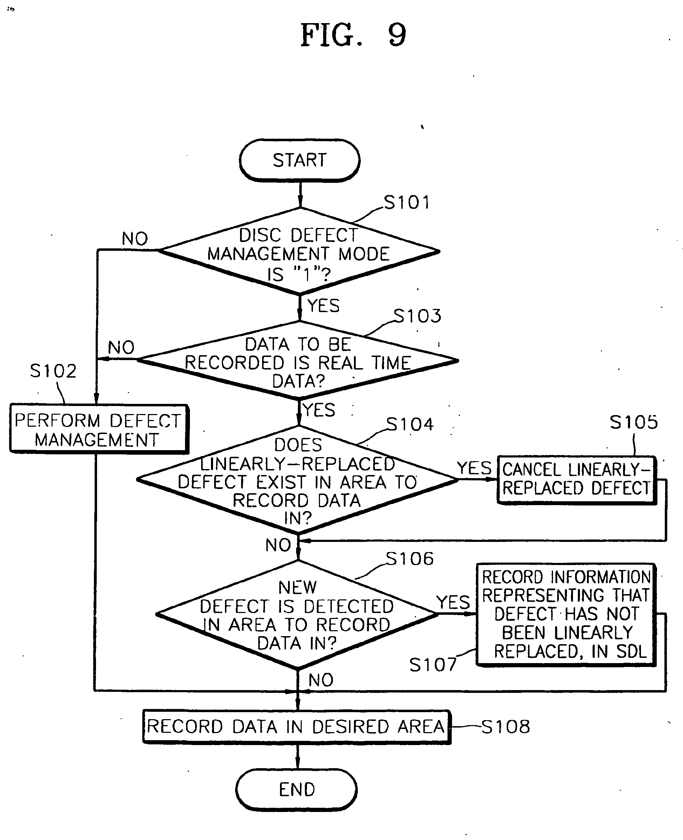

Figure 9 is a flowchart illustrating a method of recording data in real time without performing defect management using linear replacement with respect to only data desired to be recorded when the disc defect management mode is "1".

In Figure 9, first, a determination of whether a disc defect management mode is "1" is set before recording of data on a disc begins, in step S101. If the disc defect management mode is "1", it is determined whether data to be recorded is real time data, in step S103. If the defect management mode is "0", every data is recorded on the basis of a general defect managing method defined in the standard book version 1.0, in steps S102 and S108. When it is determined in step S103 that data to be recorded is not real time data, step S102 of performing general defect management is performed. When it is determined in step S103 that data to be recorded is real time data, it is determined whether an already-linearly-replaced defect exists in an area where data is to be recorded, in step S104.

When it is determined in step S104 that the linearly-replaced defect exists in the area to record data in, the linearly-replaced defect is cancelled, in step S105. When no linearly-replaced defect exists in the area to record data in, it is determined whether a newly-detected defect exists in the area to record data in, in step S106.

When it is determined in step S106 that a new defect is detected, information representing that a defect has not been linearly replaced is recorded in a secondary defect list (SDL) of a defect management area, in step S107. Next, data is recorded in a desired area in step S108. Also, when a new defect is not detected in step S106, step S108 of recording real time data in a desired region is performed.

Step S105 of cancelling a linearly-replaced defect, and step S107 of recording information representing that a defect has not been linearly replaced are performed by recording the first sector number of a replacement block as a hexadecimal "000000", among linearly-replaced defect information recorded in the SDL, and by recording the FRM information as "1". In this case, since the disc defect management mode is set as "1", it can be recognized from the comparison of this mode information with FRM information that the meaning of the FRM information becomes different from that of existing FRM information.

That is, the FRM information based on the existing standard book denotes that a block having a defect generated for a certain reason has not been replaced with a block in a spare area or no spare areas can be replaced. On the other hand, FRM information based on a new definition is added to the meaning of the existing FRM and can be information representing that when the disc defect management mode is "1", the linear replacement of a defective block replaced by an existing linear replacement method has been cancelled for real time recording, or the defective block has not been linearly replaced for real time recording.

Since a disc whose defect management mode is set as "1" is likely to include real time information, the disc can be utilized as information of prohibiting reallocation of information on a disc without consideration of real time information. Piece collection of collecting the pieces of a file on a disc, and read after reallocation can be included as a method of reallocating the information on a disc. The read after allocation is a method of reading data and then replacing a data block likely to have a defect with a block located in a spare area.

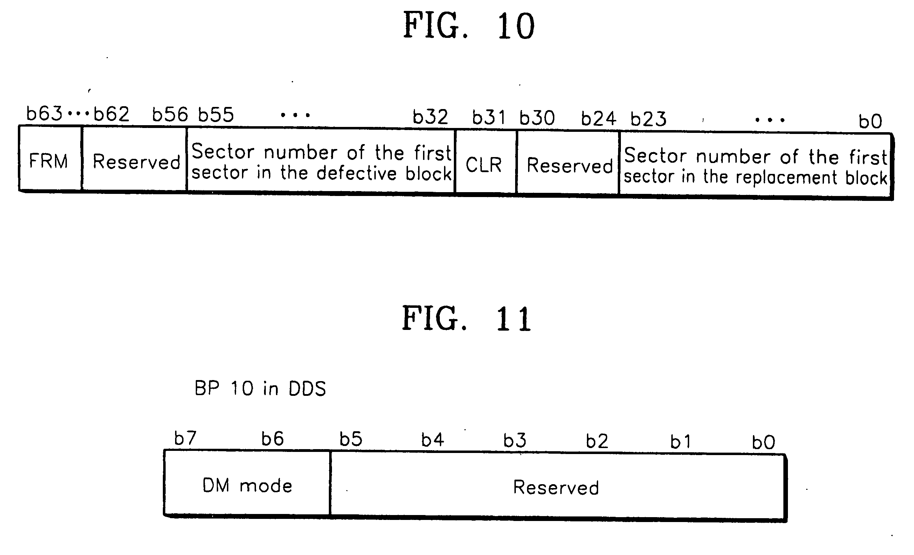

Figure 10 illustrates the structure of an improved SDL entry for cancelling linear replacement proposed by the present invention. When an already-replaced defect exists on a corresponding disc upon recording of real time data, a method of recording the information of an area, in which the first sector number of the replacement block as described above is recorded, as a hexadecimal "000000" and setting an FRM bit as "1" is exemplified as a process for cancelling the linear replacement.

This method can minimize the change in the existing standard. However, in this method, the information of a block which is determined as defective and replaced must be deleted, so that linear replacement may be arbitrarily performed, cancelled, and again performed without sequentially using a spare area. In particular, when a linearly-replaced block in the spare area is defective and again replaced, information associated with the linearly-replaced defective block in the spare area is lost.

Thus, it would be preferable that blocks in a corresponding spare area are sequentially used when linear replacement occurs, and that even when the linear replacement is cancelled, information associated with a block in the spare area replacing a corresponding defect block is maintained. When only a region recording an FRM bit and the first sector number of a replacement block is used to maintain information associated with the replaced sector number of the spare area, it is not possible to tell if the corresponding replaced block has again been replaced on account of a defect or if the linear replacement has been cancelled to record real time data.

In order to solve such a problem, a cancelled linear replacement (CLR) flag is newly defined by using a spare bit of the SDL entry which is not in use. When linear replacement with respect to a corresponding SDL entry is cancelled for recording real time data, a method of setting the CLR flag as "1" can be used. Here, when the CLR flag is set as "0", it indicates a replacement block allocated without being used by real time data. In the structure of an SDL entry of Figure 10, for example, a bit b31 not in use is used as the CLR flag.

Meanwhile, defect management information for recording real time data can be roughly divided into three cases in which: (1) real time data is not recorded on the entire disc; (2) two types of data, i.e., real time data and non-real time data, coexist on a disc, and a linear replacement defect managing method is not used with respect to only the real time data; and (3) only the real time data is recorded in the entire disc, i.e., the linear replacement defect managing method is not used with respect to all recorded data.

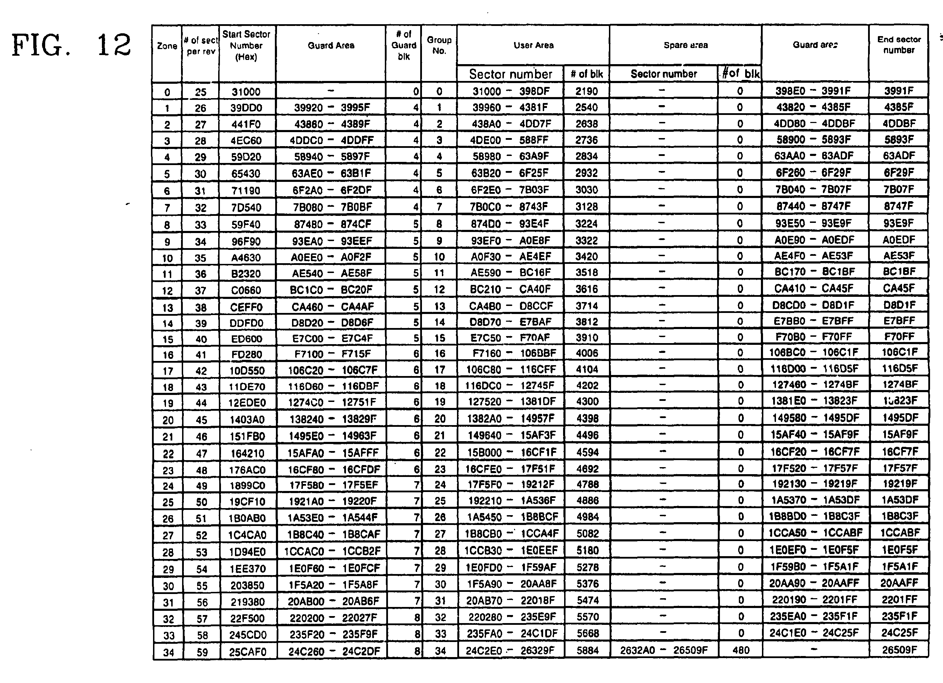

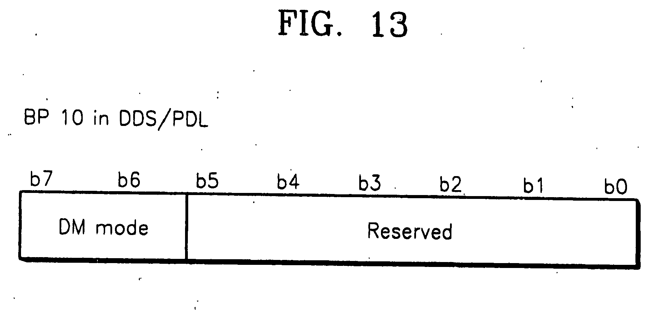

Particularly, in the third case, real time replacement is not used for the entire disc, so that a spare area for defect management can be set to a smaller size than in the first and second cases. This will be described in detail later referring to Figures 12 and 13.

When these three or more defect managing methods are applied to one disc, various correspondences are possible according to the purpose of use of a disc, and the disc can be more effectively used. However, considering a condition such as the case of changing and using discs between reproduction apparatuses, the defect management conditions in which a corresponding disc is used must be described in more detail. 1-bit disc defect management mode information representing use or non-use of linear replacement described in Figure 8 is deficient for defect management information in the above case.

Thus, as shown in Figure 11, defect management mode information capable of representing linear replacement or non-linear replacement depending on a plurality of different defect management modes is stored in a reserved byte located in the DDS of the defect management area (DMA) on a disc. That is, Figure 11 shows the case of using two significant bits b7 and b6 of the relative byte position BP10 of DDS, i.e., the eleventh byte thereof, by taking defect management (DM) mode depending on use or non-use of linear replacement as an example.

As shown in Figure 11, when the DM mode information is "00b", it indicates that the slipping,replacement and the linear replacement are applied to all data on a disc, when the DM mode information is "01b", it indicates that the linear replacement is selectively applied according to the type of information (here, real time data and non-real time data), and when the DM mode information is "10b", it indicates that the linear replacement is not used with respect to every data.

That is, when the DM mode information is "00b", the slipping replacement and the linear replacement are mandatory, and this mode is only for data other than real time data in the first case described above. When the DM mode information is "01b", the linear replacement is mandatory, but the linear replacement for real time data is optional. This mode is defect management for a hybrid disc including both real time data and non-real time data in the second case described above. When the DM mode information is "10b", only the slipping replacement is allowable, and this mode is defect management for only real data in the third case described above. When the DM mode information is "10b", the physical layout of a disc can be changed.

Meanwhile, since linear replacement cannot be used to record real time data, a spare area necessary for linear replacement does not actually become necessary. For this case, in the present invention, only a spare area for slipping replacement is set in the last group without allocating a spare area for linear replacement as shown in Figure 12. In particular, the spare area set in the last group (here, a thirty fourth group) allocates 7680 sectors (480 ECC blocks) to a spare area for slipping replacement to process a maximum of 7679 entries capable of being registered in a primary defect list (PDL). In Figure 12, sect denotes a sector, blk denotes block, and rev denotes revolutions.

In order to obtain the compatibility between the present invention and an existing defect management structure, a flag, capable of discriminating a case in which spare areas for only slipping replacement are allocated only for real time recording from a case in which spare areas for linear replacement and slipping replacement are allocated according to an existing defect management method, is represented with significant bits b7 and b6 of the relative byte position BP 10 in the DDS and the PDL, as shown in Figure 13.

As shown in Figure 13, when two significant bits b7 and b6 representing a DM mode on the byte position BP 10 of the DDS/PDL are "00b", it indicates that an existing defect managing method is applied, and when the two significant bits b7 and b6 are "10b", a defect managing method for only real time recording without linear replacement, in which only the spare area for slipping replacement is allocated in the last group of a disc, is applied. Thus, spare areas are allocated by a method dedicated for real time recording, thereby increasing the efficiency due to the application of the space of a disc.

As described above, while compatibility between a method of the present invention and a defect managing method based on the current DVD-RAM standard is maintained, linear replacement is not performed when real time data is recorded. Thus, real time data can be recorded and reproduced.

In embodiments of the present invention, information representing a plurality of different defect management modes depending on the type of data to be recorded is stored, so that various correspondences are possible according to the purpose of use of the recording medium. Thus, the recording medium can be more effectively used.

Also, in embodiments of the present invention, when real time data is recorded, spare areas are allocated to be used for only real time. Thus, the effectiveness due to the application of the space of a disc can be increased.

## Claims

1. An apparatus for managing defects and recording data to a recording medium, the recording medium including at least a recording area, and a spare area, **characterised in that**:
the apparatus is arranged to read defect management information stored in, or record defect management information to, a control information area of the recording medium, the information representing whether replacement or non-replacement of a defective unit of the recording medium with the spare area by a linear replacement operation is required, wherein the apparatus is arranged not to replace the defective unit by linear replacement if the defect management information indicates non-replacement, even if the defective unit was previously designaled for linear replacement.

2. The apparatus of claim 1, wherein the defect management information includes defect management information associated with the entire recording medium.

3. The apparatus of claim 1, wherein the defect management information includes defect management information associated with only parts of the recording medium.

4. The apparatus of any one of the above claims, wherein the recording medium is a disc designated according to a digital versatile disc (DVD) standard.

5. The apparatus of any one of claims 1 to 3, wherein the recording medium is a digital versatile disc-random access memory (DVD-RAM) disc designated according to a DVD-RAM standard.

6. The apparatus of any one of claims 1 to 3, wherein:
the recording medium is a digital versatile disc-random access memory (DVD-RAM) disc; and
control information area includes a disc definition structure having a reserved area of a disc certification flag and a group certification flag in which the defect management information is recorded.

7. The apparatus of any one of the above claims, wherein said apparatus controls the recording of the defect management information upon an initialization of the recording medium.

8. The apparatus of any one of claims 1 to 6, wherein said apparatus controls the recording of the defect management information just before recording real time data in the user data area.

9. The apparatus of any one of the above claims, wherein said apparatus controls the recording of the control information area that includes at least a secondary defect list (SDL) in which only a start sector number of a block having a defect generated while real time data is recorded on the recording medium, and the recording of an information of the SDL for representing replacement or non-replacement of the defective block in which information representing that the defective block is not currently replaced.

10. The apparatus of any one of the above claims, wherein the recording medium includes the control information area including a disc definition structure (DDS) having a reserved area in which the defect management information is stored, wherein the defect management information includes information representing that linear replacement is applied with respect to all data to be recorded in the recording area of the recording medium, information representing that linear replacement is selectively applied according to type of the information to be recorded in the user data area, or information representing that linear replacement is not applied to all the data to be recorded in the recording area of the recording medium.

11. The apparatus of any one of the above claims, wherein in response to real time data being recorded, no portion of the spare area for linear replacement of the real time data is allocated by said apparatus, and only a portion of the spare area for slipping replacement is allocated by said apparatus.

12. The apparatus of claim 11, wherein said apparatus controls the allocation of the spare area for slipping replacement is in a last group of the recording medium by a size of sectors used for processing a maximum number of entries used for registering a primary defect list (PDL).

13. The apparatus of claim 12, wherein the recording medium includes a disc definition structure (DDS) having a reserved area, and wherein said apparatus controls the recording of the defect management information denoting use of a defect managing method for only real time recording in which linear replacement is not used by allocating only the spare area for slipping replacement, in a reserved area of each of the DDS and the PDL.

14. The apparatus of claim 1, wherein the apparatus is arranged to control the recording, on the recording medium, of at least a secondary defect list (SDL), in which only a start sector number of a block having a defect generated, while real time data is recorded on the recording medium, the recording of the defect management information of the SDL, the defect management information representing that the defective block is not currently replaced, the recording of a reserved bit of the SDL in which information representing that a linear replacement of the recording medium has been canceled, the recording of information representing that the defective block has been replaced being stored in a FRM bit of the SDL, and the recording of the start sector number of the defective block and that of the replacement block in the SDL.

15. The apparatus of claim 1, wherein the apparatus is arranged to control the recording, on the recording medium, of defect management mode information to show a plurality of defect management modes representing replacement or non-replacement of the defective unit by linear replacement according to type of data to be recorded on a recording area of the recording medium.

16. The apparatus of claim 15, wherein said apparatus controls the recording of the control information area on the recording medium, the control information area including a defect management area including a disc definition structure (DDS) having a reserved area in which the defect management mode information is stored.

17. The apparatus of claim 15 or claim 16, wherein the defect management mode information includes first defect management mode information representing that slipping replacement and linear replacement are applied to all the data to be recorded in the recording area of the recording medium, second defect management mode information representing that linear replacement is selectively applied according to type of the data on the recording medium, or third defect management mode information representing that linear replacement is not applied to all the data on the recording medium.

18. The apparatus of claim 1, comprising:
a recording unit to record the defect management information with respect to an entire disc or a specific area of the disc on the disc; and
the apparatus being arranged to determine whether a defective area of the disc is to be replaced by a block in a spare area of the disc using linear replacement according to the defect management information.

19. The apparatus of claim 18, wherein said recording unit records the defect management information for the entire disc in a reserved area of a disc certification flag in a disc definition structure (DDS) of the disc, wherein the disc is a digital versatile disc-random access memory (DVD-RAM) disc.

20. The apparatus of claim 18, wherein said recording unit records the defect management information for the specific area of the disc in a reserved area of a group certification flag in a disc definition structure (DDS) of the disc, wherein the disc is a digital versatile disc-random access memory (DVD-RAM) disc.

21. The apparatus of any one of claims 18 to 20, wherein said recording unit records the defect management information upon initialization of the disc.

22. The apparatus of any one of claims 18 to 20, wherein said recording unit records the defect management information just before real time data is recorded on the disc.

23. The apparatus of any one of claims 18 to 22, wherein the defect management information is information showing a plurality of defect management modes, and is recorded in a reserved area of a disc definition structure (DDS) of the disc.

24. The apparatus of claim 23, wherein the information showing the plurality of defect management modes includes information representing that slipping replacement and linear replacement are applied with respect to all data to be recorded in a recording area on the disc, information representing that linear replacement is selectively applied according to type of the data on the disc, and information representing that linear replacement is not applied to all the data to be recorded in the recording area on the disc.

25. The apparatus of any one of claims 18 to 24, wherein the defect management information indicates that in a real time recording of data to the disc, linear replacement is not performed by allocating only a spare area for slipping replacement.

26. The apparatus of claim 25, wherein the spare area for slipping replacement is allocated to a last group of the disc, and the defect management information is recorded in a reserved area of each of a disc definition structure (DDS) and a primary defect list (PDL) of the disc.

27. The apparatus of any one of claims 18 to 26, wherein in said apparatus, in response to the defect management information representing the non-replacement by linear replacement, controls the recording unit to not use linear replacement for real time data being recorded on the disc, and to use linear replacement for data being recorded on the disc other than the real time data.

28. The apparatus of any one of claims 18 to 26, wherein said apparatus, in response to the defect management information representing the non-replacement by linear replacement, controls the recording unit to not use linear replacement regardless of whether data to be recorded on the disc is real time data.

29. The apparatus of any one of claims 18 to 26, wherein said apparatus controls the recording unit to cancel the linear replacement of a defect on an area of the disc where real time data is to be recorded, in response to the defect management information representing the non-replacement by linear replacement.

30. The apparatus of claim 29, wherein said apparatus controls said recording unit to cancel the linear replacement by storing a flag stored as a reserved bit in a secondary defect list (SDL) and representing that the linear replacement has been canceled, said recording unit storing information representing that the defective block has been replaced in a Forced Re-Assignment Marking (FRM) bit of the SDL, and storing a start sector number of the defective block and a start sector number of the replacement block in the SDL.

31. The apparatus of claim 29, wherein said canceling by said recording unit leaves only a start sector number of the defective block in a secondary defect list (SDL), and wherein said recording unit stores information representing that the defective block has not been replaced in a Forced Re-Assignment Marking (FRM) bit of the SDL showing whether the defective block has been replaced, and stores information representing that the defective block has not been replaced in a start sector number of the replacement block in the SDL.

32. The apparatus of any one of claims 18 to 29, wherein said apparatus controls said recording unit to record only a start sector number of the defective block having a defect generated while using the disc on which the defect management information represents that linear replacement will not be used has been recorded, in a secondary defect list (SDL), to record information representing that the defective block has not been replaced in a Forced Re-Assignment Marking (FRM) bit of the SDL showing whether the defective block has been replaced, and to record information that the defective block has not been replaced in a start sector number of the replacement block in the SDL.

33. The apparatus of any one of claims 18 to 32, wherein said apparatus performs defect management based on linear replacement when a defect is generated during use of the disc on which the defect management information represents that linear replacement will be used has been recorded.

34. The apparatus of claim 1, wherein the apparatus is arranged for recording and/or reproducing real time data while managing defects on a disc, comprising:
a recording unit to record data in an area of the disc, said recording unit recording real time data in a designated part of the area in response to a determination that no new defect is detected in the area, that no linearly-replaced defect exists in the area, whether a defect management mode information represents that defect management based on linear replacement is to be used, and whether data stored on the disc in the area is real time information.

35. The apparatus of claim 34, wherein the apparatus is arranged to perform defect management in response to the defect management mode information being the defect management information representing that the linear replacement is to be used and in response to the data to be recorded not being real time data.

36. The apparatus of claim 34 or claim 35, wherein said recording unit is arranged to cancel linear replacement in response to the linearly-replaced defect existing in the area in which to record the data.

37. The apparatus of claim 36, wherein said canceling is implemented by leaving only a start sector number of a defective block in the SDL, storing information representing that the defective block has not been replaced in a Forced Re-Assignment Mark (FRM) bit of the SDL showing whether the defective block has been replaced, and recording information representing that the defective block has not been replaced in a start sector number of a replacement block in the SDL.

38. The apparatus of claim 36, wherein said canceling is implemented by setting a flag representing that linear replacement has been canceled using a reserved bit of the SDL, storing information representing that a defective block has been replaced in a Forced Re-Assignment Mark (FRM) bit of the SDL, and recording a start sector number of a defective block and a start sector number of a replacement block in the SDL.

39. The apparatus of any one of claims 34 to 38, wherein said recording unit is arranged to record defect management information representing that linear replacement has not been performed, in response to a new defect being detected.

40. The apparatus of claim 39, wherein said recording defect management information representing that linear replacement has not been performed is implemented by leaving only a start sector number of a defective block in the SDL, storing information representing that the defective block has not been replaced in a Forced Re-Assignment Mark (FRM) bit of the SDL showing whether the defective block has been replaced, and recording information representing that the defective block has not been replaced in a start sector number of a replacement block in the SDL.

41. The apparatus of any one of claims 34 to 40, wherein the disc is a digital versatile disc-random access memory (DVD-RAM) disc having a defect definition structure (DDS), and the defect management mode information is defect management information representing replacement or non-replacement by linear replacement for the entire disc, and is stored in a reserved area of a disc certification flag in the DDS.

42. The apparatus of any one of claims 34 to 40, wherein the disc is a digital versatile disc-random access memory (DVD-RAM) disc having a defect definition structure (DDS), and the defect management mode information is defect management information representing replacement or non-replacement by linear replacement for only some data groups of the disc, and is stored in a reserved area of a group certification flag in the DDS.

43. The apparatus of any one of claims 34 to 42, wherein the defect management mode information includes information representing that slipping replacement and linear replacement are applied to all the data to be recorded on the disc, information representing that linear replacement is selectively applied according to type of data, or information representing that linear replacement is not applied to all the data to be recorded on the disc, and the defect management mode information is stored in a reserved area of the DDS.

44. The apparatus of any one of claims 34 to 40, wherein the disc is a digital versatile disc-random access memory (DVD-RAM) disc having a defect definition structure (DDS) and a primary defect list (PDL), and the defect management mode information is defect management information representing the use of a defect managing method for only real time recording in which linear replacement is not used by allocating only the spare area for slipping replacement, and is stored in a reserved area of the DDS and a reserved area of the PDL.

## Patentansprüche

1. Vorrichtung zur Verwaltung von Defekten und Aufzeichnung von Daten auf ein Aufzeichnungsmedium, wobei das Aufzeichnungsmedium mindestens einen Aufzeichnungsbereich und einen Reservebereich enthält, **dadurch gekennzeichnet, dass**
die Vorrichtung dafür ausgelegt ist, Defektverwaltungsinformationen zu lesen, die in einem Steuerinformationsbereich des Aufzeichnungsmediums gespeichert sind, oder Defektverwaltungsinformationen in diesem aufzuzeichnen, wobei die Informationen darstellen, ob eine Ersetzung oder Nichtersetzung einer defekten Einheit des Aufzeichnungsmediums mit dem Reservebereich durch eine lineare Ersetzungsoperation erforderlich ist, wobei die Vorrichtung dafür ausgelegt ist, die defekte Einheit nicht durch lineare Ersetzung zu ersetzen, wenn die Defektverwaltungsinformationen Nichtersetzung anzeigen, auch wenn die defekte Einheit zuvor für lineare Ersetzung designiert wurde.

2. Vorrichtung nach Anspruch 1, wobei die Defektverwaltungsinformationen Defektverwaltungsinformationen umfassen, die mit dem gesamten Aufzeichnungsmedium assoziiert sind.

3. Vorrichtung nach Anspruch 1, wobei die Defektverwaltungsinformationen Defektverwaltungsinformationen umfassen, die nur mit Teilen des Aufzeichnungsmediums assoziiert sind.

4. Vorrichtung nach einem der vorhergehenden Ansprüche, wobei das Aufzeichnungsmedium ein Datenträger ist, der gemäß dem Standard der Digital Versatile Disc (DVD) designiert ist.

5. Vorrichtung nach einem der Ansprüche 1 bis 3, wobei das Aufzeichnungsmedium ein Datenträger des Typs Digital Versatile Disc - Random Access Memory (DVD-RAM) ist, der gemäß einem DVD-RAM-Standard designiert ist.

6. Vorrichtung nach einem der Ansprüche 1 bis 3, wobei
das Aufzeichnungsmedium ein Datenträger des Direktzugriffsspeichers der Digital Versatile Disc (DVD-RAM) ist; und
der Steuerinformationsbereich eine Datenträgerdefinitionsstruktur enthält, die einen reservierten Bereich für ein Datenträgerzertifikations-Flag und ein Gruppenzertifikations-Flag aufweist, worin die Defektverwaltungsinformationen aufgezeichnet werden.

7. Vorrichtung nach einem der vorhergehenden Ansprüche, wobei die Vorrichtung die Aufzeichnung der Defektverwaltungsinformationen bei einer Initialisierung des Aufzeichnungsmediums steuert.

8. Vorrichtung nach einem der Ansprüche 1 bis 6, wobei die Vorrichtung die Aufzeichnung der Defektverwaltungsinformationen gerade eben vor der Aufzeichnung von Echtzeitdaten in dem Benutzerdatenbereich steuert.

9. Vorrichtung nach einem der vorhergehenden Ansprüche, wobei die Vorrichtung Folgendes steuert: Aufzeichnung des Steuerinformationsbereichs mit mindestens einer Sekundärdefektliste (SDL) mit nur einer Startsektornummer eines Blocks, bei dem ein Defekt erzeugt wird, während Echtzeitdaten auf dem Aufzeichnungsmedium aufgezeichnet werden, und die Aufzeichnung einer Information der SDL zur Darstellung von Ersetzung oder Nichtersetzung des defekten Blocks mit Informationen, die darstellen, dass der defekte Block gerade nicht ersetzt wird.

10. Vorrichtung nach einem der vorhergehenden Ansprüche, wobei das Aufzeichnungsmedium den Steuerinformationsbereich enthält, der eine Datenträgerdefinitionsstruktur (DDS) enthält, mit einem reservierten Bereich, in dem die Defektverwaltungsinformationen gespeichert werden, wobei die Defektverwaltungsinformationen Folgendes umfassen: Informationen, die darstellen, dass lineare Ersetzung mit Bezug auf alle aufzuzeichnenden Daten in dem Aufzeichnungsbereich des Aufzeichnungsmediums angewandt wird, Informationen, die darstellen, dass lineare Ersetzung selektiv gemäß der Art der in dem Benutzerdatenbereich aufzuzeichnenden Informationen angewandt wird, oder Informationen, die darstellen, dass Linearersetzung nicht auf alle in dem Aufzeichnungsbereich des Aufzeichnungsmediums aufzuzeichnende Daten angewandt wird.

11. Vorrichtung nach einem der vorhergehenden Ansprüche, wobei als Reaktion auf die Aufzeichnung von Echtzeitdaten kein Teil des Reservebereichs für lineare Ersetzung der Echtzeitdaten durch die Vorrichtung zugeteilt wird und nur ein Teil des Reservebereichs für Slipping-Ersetzung durch die Vorrichtung zugeteilt wird.

12. Vorrichtung nach Anspruch 11, wobei die Vorrichtung Folgendes steuert: die Zuteilung des Reservebereichs für Slipping-Ersetzung befindet sich in einer letzten Gruppe des Aufzeichnungsmediums nach einer Größe von für die Verarbeitung verwendeten Sektoren und einer Maximalzahl von für die Registrierung einer Primärdefektliste (PDL) verwendeten Einträgen.

13. Vorrichtung nach Anspruch 12, wobei das Aufzeichnungsmedium eine Datenträgerdefinitionsstruktur (DDS) mit einem reservierten Bereich enthält und wobei die Vorrichtung Folgendes steuert: die Aufzeichnung der Defektverwaltungsinformationen, die die Verwendung eines Defektverwaltungsverfahrens bezeichnen, nur für Echtzeit-Aufzeichnung, wobei keine lineare Ersetzung verwendet wird, indem nur der Reservebereich für Slipping-Ersetzung zugeteilt wird, in einem reservierten Bereich jeweils der DDS und der PDL.

14. Vorrichtung nach Anspruch 1, wobei die Vorrichtung dafür ausgelegt ist, Folgendes zu steuern: die Aufzeichnung mindestens einer Sekundärdefektliste (SDL) mit nur einer Startsektornummer eines Blocks, bei dem ein Defekt erzeugt wird, während Echtzeitdaten auf dem Aufzeichnungsmedium aufgezeichnet werden, auf dem Aufzeichnungsmedium, die Aufzeichnung der Defektverwaltungsinformationen der SDL, wobei die Defektverwaltungsinformationen darstellen, dass der defekte Block gerade nicht ersetzt wird, die Aufzeichnung eines reservierten Bit der SDL mit Informationen, die darstellen, dass eine lineare Ersetzung des Aufzeichnungsmediums gestrichen worden ist, die Aufzeichnung von Informationen, die darstellen, dass der defekte Block ersetzt wurde, die in einem FRM-Bit der SDL gespeichert werden, und die Aufzeichnung der Startsektornummer des defekten Blocks und der des Ersetzungsblocks in der SDL.

15. Vorrichtung nach Anspruch 1, wobei die Vorrichtung dafür ausgelegt ist, Folgendes zu steuern: die Aufzeichnung von Defektverwaltungsmodusinformationen auf dem Aufzeichnungsmedium, um mehrere Defektverwaltungsmoden zu zeigen, die Ersetzung oder Nichtersetzung der defekten Einheit durch lineare Ersetzung gemäß der Art von auf einem Aufzeichnungsbereich des Aufzeichnungsmediums aufzuzeichnenden Daten darstellen.

16. Vorrichtung nach Anspruch 15, wobei die Vorrichtung Folgendes steuert: die Aufzeichnung des Steuerinformationsbereichs auf dem Aufzeichnungsmedium, wobei der Steuerinformationsbereich einen Defektverwaltungsbereich enthält, der eine Datenträgerdefinitionsstruktur (DDS) enthält, die einen reservierten Bereich aufweist, in dem die Defektverwaltungsmodusinformationen gespeichert werden.

17. Vorrichtung nach Anspruch 15 oder Anspruch 16, wobei die Defektverwaltungsmodusinformationen Folgendes umfassen: erste Defektverwaltungsmodusinformationen, die darstellen, dass Slipping-Ersetzung und lineare Ersetzung auf alle in dem Aufzeichnungsbereich des Aufzeichnungsmediums aufzuzeichnende Daten angewandt werden, zweite Defektverwaltungsmodusinformationen, die darstellen, dass lineare Ersetzung selektiv gemäß der Art der Daten auf dem Aufzeichnungsmedium angewandt wird, oder dritte Defektverwaltungsmodusinformationen, die darstellen, dass Linearersetzung nicht auf alle Daten auf dem Aufzeichnungsmedium angewandt wird.

18. Vorrichtung nach Anspruch 1, umfassend:
eine Aufzeichnungseinheit zum Aufzeichnen der Defektverwaltungsinformationen mit Bezug auf einen gesamten Datenträger oder einen spezifischen Bereich des Datenträgers auf dem Datenträger; und
wobei die Vorrichtung dafür ausgelegt ist, gemäß den Defektverwaltungsinformationen zu bestimmen, ob ein defekter Bereich des Datenträgers unter Verwendung von linearer Ersetzung durch einen Block in einem Reservebereich des Datenträgers zu ersetzen ist.

19. Vorrichtung nach Anspruch 18, wobei die Aufzeichnungseinheit die Defektverwaltungsinformationen für den gesamten Datenträger in einem reservierten Bereich eines Datenträgerzertifikations-Flag in einer Datenträgerdefinitionsstruktur (DDS) des Datenträgers aufzeichnet, wobei der Datenträger ein Datenträger des Direktzugriffs der Digital Versatile Disc (DVD-RAM) ist.

20. Vorrichtung nach Anspruch 18, wobei die Aufzeichnungseinheit die Defektverwaltungsinformationen für den spezifischen Bereich des Datenträgers in einem reservierten Bereich eines Gruppenzertifikations-Flag in einer Datenträgerdefinitionsstruktur (DDS) des Datenträgers aufzeichnet, wobei der Datenträger ein Datenträger des Direktzugriffs der Digital Versatile Disc (DVD-RAM) ist.

21. Vorrichtung nach einem der Ansprüche 18 bis 20, wobei die Aufzeichnungseinheit die Defektverwaltungsinformationen bei Initialisierung des Datenträgers aufzeichnet.

22. Vorrichtung nach einem der Ansprüche 18 bis 20, wobei die Aufzeichnungseinheit die Defektverwaltungsinformationen gerade eben vor der Aufzeichnung von Echtzeitdaten auf dem Datenträger aufzeichnet.

23. Vorrichtung nach einem der Ansprüche 18 bis 22, wobei die Defektverwaltungsinformationen Informationen sind, die mehrere Defektverwaltungsmoden zeigen, und in einem reservierten Bereich einer Datenträgerdefinitionsstruktur (DDS) des Datenträgers aufgezeichnet werden.

24. Vorrichtung nach Anspruch 23, wobei die Informationen, die die mehreren Defektverwaltungsmoden zeigen, Folgendes umfassen: Informationen, die darstellen, dass Slipping-Ersetzung und lineare Ersetzung mit Bezug auf alle in einem Aufzeichnungsbereich auf dem Datenträger aufzuzeichnende Daten angewandt werden, Informationen, die darstellen, dass lineare Ersetzung selektiv gemäß der Art der Daten auf dem Datenträger angewandt wird, und Informationen, die darstellen, dass lineare Ersetzung nicht auf alle in dem Aufzeichnungsbereich auf dem Datenträger aufzuzeichnende Daten angewandt wird.

25. Vorrichtung nach einem der Ansprüche 18 bis 24, wobei die Defektverwaltungsinformationen angeben, dass bei einer Echtzeitaufzeichnung von Daten auf den Datenträger lineare Ersetzung nicht durchgeführt wird, indem nur ein Reservebereich für Slipping-Ersetzung zugeteilt wird.

26. Vorrichtung nach Anspruch 25, wobei der Reservebereich für Slipping-Ersetzung einer letzten Gruppe des Datenträgers zugeteilt wird und die Defektverwaltungsinformationen in einem reservierten Bereich jeweils einer Datenträgerdefinitionsstruktur (DDS) und einer Primärdefektliste (PDL) des Datenträgers aufgezeichnet werden.

27. Vorrichtung nach einem der Ansprüche 18 bis 26, wobei die Vorrichtung als Reaktion auf die Defektverwaltungsinformationen, die die Nichtersetzung durch lineare Ersetzung darstellen, die Aufzeichnungseinheit dafür steuert, keine lineare Ersetzung für auf dem Datenträger aufgezeichnete Echtzeitdaten zu verwenden und lineare Ersetzung für auf dem Datenträger aufgezeichnete Daten zu verwenden, die von den Echtzeitdaten verschieden sind.

28. Vorrichtung nach einem der Ansprüche 18 bis 26, wobei die Vorrichtung als Reaktion auf die Defektverwaltungsinformationen, die die Nichtersetzung durch lineare Ersetzung darstellen, die Aufzeichnungseinheit dafür steuert, ungeachtet ob auf dem Datenträger aufzuzeichnende Daten Echtzeitdaten sind, keine lineare Ersetzung zu verwenden.

29. Vorrichtung nach einem der Ansprüche 18 bis 26, wobei die Vorrichtung die Aufzeichnungseinheit dafür steuert, die lineare Ersetzung eines Defekts auf einem Bereich des Datenträgers, wo Echtzeitdaten aufzuzeichnen sind, als Reaktion auf die Defektverwaltungsinformationen, die die Nichtersetzung durch lineare Ersetzung darstellen, zu streichen.

30. Vorrichtung nach Anspruch 29, wobei die Vorrichtung die Aufzeichnungseinheit dafür steuert, die lineare Ersetzung zu streichen, indem ein als ein reserviertes Bit in einer Sekundärdefektliste (SDL) gespeichertes Flag gespeichert wird, das darstellt, dass die lineare Ersetzung gestrichen worden ist, wobei die Aufzeichnungseinheit Informationen, die darstellen, dass der defekte Block ersetzt wurde, in einem Bit der erzwungenen Neuzuweisungsmarkierung (FRM) der SDL speichert und eine Startsektornummer des defekten Blocks und eine Startsektornummer des Ersetzungsblocks in der SDL speichert.

31. Vorrichtung nach Anspruch 29, wobei das Streichen durch die Aufzeichnungseinheit nur eine Startsektornummer eines defekten Blocks in einer Sekundärdefektliste (SDL) zurücklässt und wobei die Aufzeichnungseinheit Informationen, die darstellen, dass der defekte Block nicht ersetzt wurde, in einem Bit der erzwungenen Neuzuweisungsmarkierung (FRM) der SDL speichert, die zeigen, ob der defekte Block ersetzt wurde, und Informationen, die darstellen, dass der defekte Block nicht in einer Startsektornummer des Ersetzungsblocks ersetzt wurde, in der SDL speichert.

32. Vorrichtung nach einem der Ansprüche 18 bis 29, wobei die Vorrichtung die Aufzeichnungseinheit für Folgendes steuert: Aufzeichnen nur einer Startsektornummer des defekten Blocks, bei dem ein Defekt erzeugt wird, während der Datenträger verwendet wird, auf dem die Defektverwaltungsinformationen, die darstellen, dass keine lineare Ersetzung verwendet werden wird, aufgezeichnet wurden, in einer Sekundärdefektliste (SDL), Aufzeichnen von Informationen, die darstellen, dass der defekte Block nicht ersetzt worden ist, in einem Bit der erzwungenen Neuzuweisungsmarkierung (FRM) der SDL, das zeigt, ob der defekte Block ersetzt worden ist, und Aufzeichnen von Informationen, dass der defekte Block nicht in einer Startsektornummer des Ersetzungsblocks ersetzt worden ist, in der SDL.

33. Vorrichtung nach einem der Ansprüche 18 bis 32, wobei die Vorrichtung Defektverwaltung auf der Basis von linearer Ersetzung durchführt, wenn ein Defekt während der Verwendung des Datenträgers erzeugt wird, auf dem die Defektverwaltungsinformationen, die darstellen, dass lineare Ersetzung verwendet werden wird, aufgezeichnet werden.

34. Vorrichtung nach Anspruch 1, wobei die Vorrichtung dafür ausgelegt ist, Echtzeitdaten aufzuzeichnen und/oder wiederzugeben, während Defekte auf einem Datenträger verwaltet werden, umfassend:
eine Aufzeichnungseinheit zum Aufzeichnen von Daten in einem Bereich des Datenträgers, wobei die Aufzeichnungseinheit Echtzeitdaten in einem designierten Teil des Bereichs als Reaktion auf eine Bestimmung aufzeichnet, dass kein neuer Defekt in dem Bereich detektiert wird, dass kein linear ersetzter Defekt in dem Bereich existiert, ob Defektverwaltungsmodusinformationen darstellen, dass Defektverwaltung auf der Basis von linearer Ersetzung zu verwenden ist und ob auf dem Datenträger in dem Bereich gespeicherte Daten Echtzeitinformationen sind.

35. Vorrichtung nach Anspruch 34, wobei die Vorrichtung dafür ausgelegt ist, Defektverwaltung durchzuführen, wenn die Defektverwaltungsmodusinformationen die Defektverwaltungsinformationen sind, die darstellen, dass die lineare Ersetzung zu verwenden ist, und wenn die aufzuzeichnenden Daten keine Echtzeitdaten sind.

36. Vorrichtung nach Anspruch 34 oder Anspruch 35, wobei die Aufzeichnungseinheit dafür ausgelegt ist, lineare Ersetzung zu streichen, wenn der linear ersetzte Defekt in dem Bereich existiert, in dem die Daten aufzuzeichnen sind.

37. Vorrichtung nach Anspruch 36, wobei das Streichen implementiert wird, indem nur eine Startsektornummer eines defekten Blocks in der SDL zurückgelassen wird, Informationen, die darstellen, dass der defekte Block nicht ersetzt worden ist, in einem Bit der erzwungenen Neuzuweisungsmarkierung (FRM) der SDL gespeichert werden, die zeigen, ob der defekte Block ersetzt worden ist, und Informationen, die darstellen, dass der defekte Block nicht in einer Startsektornummer eines Ersetzungsblocks ersetzt worden ist, in der SDL aufgezeichnet werden.

38. Vorrichtung nach Anspruch 36, wobei das Streichen implementiert wird, indem ein Flag gesetzt wird, das darstellt, dass lineare Ersetzung gestrichen worden ist, wobei ein reserviertes Bit der SDL verwendet wird, Informationen, die darstellen, dass ein defekter Block ersetzt worden ist, in einem Bit der erzwungenen Neuzuweisungsmarkierung (FRM) der SDL gespeichert werden und eine Startsektornummer eines defekten Blocks und eine Startsektornummer eines Ersetzungsblocks in der SDL aufgezeichnet werden.

39. Vorrichtung nach einem der Ansprüche 34 bis 38, wobei die Aufzeichnungseinheit dafür ausgelegt ist, als Reaktion auf das Detektieren eines neuen Defekts Defektverwaltungsinformationen aufzuzeichnen, die darstellen, dass keine lineare Ersetzung durchgeführt worden ist.

40. Vorrichtung nach Anspruch 39, wobei das Aufzeichnen von Defektverwaltungsinformationen, die darstellen, dass keine lineare Ersetzung durchgeführt worden ist, implementiert wird, indem nur eine Startsektornummer eines defekten Blocks in der SDL zurückgelassen wird, Informationen, die darstellen, dass der defekte Block nicht ersetzt worden ist, in einem Bit der erzwungenen Neuzuweisungsmarkierung (FRM) der SDL gespeichert werden, die zeigen, ob der defekte Block ersetzt worden ist, und Informationen, die darstellen, dass der defekte Block nicht in einer Startsektornummer eines Ersetzungsblocks ersetzt worden ist, in der SDL aufgezeichnet werden.

41. Vorrichtung nach einem der Ansprüche 34 bis 40, wobei der Datenträger ein Datenträger des Direktzugriffs der Digital Versatile Disc (DVD-RAM) mit einer Defektdefinitionsstruktur (DDS) ist und die Defektverwaltungsmodusinformationen Defektverwaltungsinformationen sind, die Ersetzung oder Nichtersetzung durch lineare Ersetzung für den gesamten Datenträger darstellen und in einem reservierten Bereich eines Datenträgerzertifikations-Flag in der DDS gespeichert werden.

42. Vorrichtung nach einem der Ansprüche 34 bis 40, wobei der Datenträger ein Datenträger des Direktzugriffs der Digital Versatile Disc (DVD-RAM) ist, der eine Defektdefinitionsstruktur (DDS) aufweist, und die Defektverwaltungsmodusinformationen Defektverwaltungsinformationen sind, die Ersetzung oder Nichtersetzung durch lineare Ersetzung nur für bestimmte Datengruppen des Datenträgers darstellen und in einem reservierten Bereich eines Gruppenzertifikations-Flag in der DDS gespeichert werden.

43. Vorrichtung nach einem der Ansprüche 34 bis 42, wobei die Defektverwaltungsmodusinformationen Folgendes umfassen: Informationen, die darstellen, dass Slipping-Ersetzung und lineare Ersetzung auf alle auf dem Datenträger aufzuzeichnende Daten angewandt werden, Informationen, die darstellen, dass lineare Ersetzung selektiv gemäß der Art der Daten angewandt wird, oder Informationen, die darstellen, dass lineare Ersetzung nicht auf alle auf dem Datenträger aufzuzeichnende Daten angewandt wird, und die Defektverwaltungsmodusinformationen in einem reservierten Bereich der DDS gespeichert werden.

44. Vorrichtung nach einem der Ansprüche 34 bis 40, wobei der Datenträger ein Datenträger des Typs Digital Versatile Disc - Random Access Memory (DVD-RAM) ist, der eine Defektdefinitionsstruktur (DDS) und eine Primärdefektliste (PDL) aufweist, und die Defektverwaltungsmodusinformationen Defektverwaltungsinformationen sind, die die Verwendung eines Defektverwaltungsverfahrens nur für Echtzeitaufzeichnung darstellen, wobei lineare Ersetzung nicht verwendet wird, indem nur der Reservebereich für Slipping-Ersetzung zugeteilt wird, und in einem reservierten Bereich der DDS und einem reservierten Bereich der PDL gespeichert werden.

## Revendications

1. Appareil destiné à gérer des défauts et enregistrer des données sur un support d'enregistrement, le support d'enregistrement comportant au moins une zone d'enregistrement et une zone de réserve, **caractérisé en ce que** :
l'appareil est conçu pour lire des informations de gestion de défauts stockées dans une zone d'informations de commande, ou pour enregistrer des informations de gestion de défauts dans cette zone du support d'enregistrement, les informations indiquant si un remplacement ou un non-remplacement d'une unité défectueuse du support d'enregistrement comportant la zone de réserve par une opération de remplacement linéaire est requis, dans lequel l'appareil est conçu pour ne pas remplacer l'unité défectueuse par un remplacement linéaire si les informations de gestion de défauts indiquent un non-remplacement, même si l'unité défectueuse a déjà été désignée pour un remplacement linéaire.

2. Appareil selon la revendication 1, dans lequel les informations de gestion de défauts comprennent des informations de gestion de défauts associées à la totalité du support d'enregistrement.

3. Appareil selon la revendication 1, dans lequel les informations de gestion de défauts comprennent des informations de gestion de défauts associées à seulement certaines parties du support d'enregistrement.

4. Appareil selon l'une quelconque des revendications précédentes, dans lequel le support d'enregistrement est un disque conçu conformément à une norme de disque numérique universel (DVD).

5. Appareil selon l'une quelconque des revendications 1 à 3, dans lequel le support d'enregistrement est un disque de mémoire vive sur disque numérique universel (DVD-RAM) conçu conformément à une norme DVD-RAM.

6. Appareil selon l'une quelconque des revendications 1 à 3, dans lequel :
le support d'enregistrement est un disque de mémoire vive sur disque numérique universel (DVD-RAM) ; et la zone d'informations de commande comprend une structure de définition de disque ayant une zone réservée constituée d'un indicateur de certification de disque et d'un indicateur de certification de groupe dans laquelle sont enregistrées les informations de gestion de défauts.

7. Appareil selon l'une quelconque des revendications précédentes, dans lequel ledit appareil commande l'enregistrement des informations de gestion de défauts lors d'une initialisation du support d'enregistrement.

8. Appareil selon l'une quelconque des revendications 1 à 6, dans lequel ledit appareil commande l'enregistrement des informations de gestion de défauts immédiatement avant d'enregistrer des données en temps réel dans la zone de données d'utilisateur.

9. Appareil selon l'une quelconque des revendications précédentes, dans lequel ledit appareil commande l'enregistrement d'une zone d'informations de commande qui comprend au moins une liste de défauts secondaires (SDL) qui contient seulement un numéro de secteur de départ d'un bloc ayant un défaut généré pendant que des données sont enregistrées en temps réel sur le support d'enregistrement, et l'enregistrement d'informations de la liste SDL pour indiquer le remplacement ou le non-remplacement du bloc défectueux, qui contiennent des informations indiquant que ce bloc défectueux n'est pas en cours de remplacement.

10. Appareil selon l'une quelconque des revendications précédentes, dans lequel le support d'enregistrement comprend la zone d'informations de commande comprenant une structure de définition de disque (DDS) ayant une zone réservée dans laquelle sont stockées les informations de gestion de défauts, dans lequel les informations de gestion de défauts comprennent des informations indiquant qu'un remplacement linéaire est appliqué à toutes les données devant être enregistrées dans la zone d'enregistrement du support d'enregistrement, des informations indiquant que le remplacement linéaire est appliqué sélectivement en fonction du type des informations devant être enregistrées dans la zone de données d'utilisateur, ou des informations indiquant qu'un remplacement linéaire n'est pas appliqué à toutes les données devant être enregistrées dans la zone d'enregistrement du support d'enregistrement.

11. Appareil selon l'une quelconque des revendications précédentes, dans lequel, en réponse à l'enregistrement de données en temps réel, aucune partie de la zone de réserve destinée au remplacement linéaire des données en temps réel n'est allouée par ledit appareil, et seule une partie de la zone de réserve destinée à un remplacement glissant est allouée par ledit appareil.

12. Appareil selon la revendication 11, dans lequel ledit appareil commande l'allocation de la zone de réserve pour le remplacement glissant dans un dernier groupe du support d'enregistrement selon la taille des secteurs utilisés pour traiter un nombre maximum d'entrées utilisées pour l'enregistrement d'une liste de défauts primaires (PDL).

13. Appareil selon la revendication 12, dans lequel le support d'enregistrement comprend une structure de définition de disque (DDS) ayant une zone réservée, et dans lequel ledit appareil commande l'enregistrement des informations de gestion de défauts indiquant l'utilisation d'une méthode de gestion de défauts pour le seul enregistrement en temps réel lors duquel un remplacement linéaire n'est pas utilisé, par le fait de n'allouer la zone de réserve que pour le remplacement glissant dans une zone réservée de chacune de la structure DDS et de la liste PDL.

14. Appareil selon la revendication 1, dans lequel l'appareil est conçu pour commander l'enregistrement, sur le support d'enregistrement, d'au moins une liste de défauts secondaires (SDL) qui contient seulement un numéro de secteur de départ d'un bloc ayant un défaut généré, pendant que des données sont enregistrées en temps réel sur le support d'enregistrement, l'enregistrement des informations de gestion de défauts de la liste SDL, les informations de gestion de défauts indiquant que le bloc défectueux n'est pas en cours de remplacement, l'enregistrement d'un bit réservé de la liste SDL dans laquelle des informations indiquant qu'un remplacement linéaire du support d'enregistrement a été annulé, l'enregistrement d'informations indiquant que le bloc défectueux a été remplacé, qui sont stockées dans un bit FRM de la liste SDL, et l'enregistrement du numéro de secteur de départ du bloc défectueux et de celui du bloc de remplacement dans la liste SDL.

15. Appareil selon la revendication 1, dans lequel l'appareil est conçu pour commander l'enregistrement, sur le support d'enregistrement, d'informations de mode de gestion de défauts pour montrer une pluralité de modes de gestion de défauts indiquant le remplacement ou le non-remplacement de l'unité défectueuse par remplacement linéaire en fonction du type de données devant être enregistrées sur une zone d'enregistrement du support d'enregistrement.

16. Appareil selon la revendication 15, dans lequel ledit appareil commande l'enregistrement de la zone d'informations de commande sur le support d'enregistrement, la zone d'informations de commande comprenant une zone de gestion de défauts contenant une structure de définition de disque (DDS) ayant une zone réservée dans laquelle sont stockées les informations de mode de gestion de défauts.

17. Appareil selon la revendication 15 ou 16, dans lequel les informations de mode de gestion de défauts comprennent une première information de mode de gestion de défauts indiquant qu'un remplacement glissant et qu'un remplacement linéaire sont appliqués à la totalité des données devant être enregistrées dans la zone d'enregistrement du support d'enregistrement, une seconde information de mode de gestion de défauts indiquant qu'un remplacement linéaire est sélectivement appliqué en fonction du type de données sur le support d'enregistrement, ou une troisième information de mode de gestion de défauts indiquant qu'un remplacement linéaire n'est pas appliqué à la totalité des données sur le support d'enregistrement.

18. Appareil selon la revendication 1, comprenant :
une unité d'enregistrement pour enregistrer les informations de gestion de défauts concernant la totalité d'un disque ou une zone spécifique du disque présente sur le disque ; et
l'appareil étant conçu pour déterminer si une zone défectueuse du disque doit être remplacée par un bloc dans une zone de réserve du disque en utilisant un remplacement linéaire en conformité avec les informations de gestion de défauts.

19. Appareil selon la revendication 18, dans lequel ladite unité d'enregistrement enregistre les informations de gestion de défauts pour la totalité du disque dans une zone réservée pour un indicateur de certification de disque dans une structure de définition de disque (DDS) du disque, dans lequel le disque est un disque de mémoire vive sur disque numérique universel (DVD-RAM).

20. Appareil selon la revendication 18, dans lequel ladite unité d'enregistrement enregistre les informations de gestion de défauts pour la zone spécifique du disque dans une zone réservée pour un indicateur de certification de groupe dans une structure de définition de disque (DDS) du disque, dans lequel le disque est un disque de mémoire vive sur disque numérique universel (DVD-RAM).

21. Appareil selon l'une quelconque des revendications 18 à 20, dans lequel ladite unité d'enregistrement enregistre les informations de gestion de défauts lors de l'initialisation du disque.

22. Appareil selon l'une quelconque des revendications 18 à 20, dans lequel ladite unité d'enregistrement enregistre les informations de gestion de défauts immédiatement avant l'enregistrement sur le disque de données en temps réel.

23. Appareil selon l'une quelconque des revendications 18 à 22, dans lequel les informations de gestion de défauts sont des informations montrant une pluralité de modes de gestion de défauts, et sont enregistrées dans une zone réservée d'une structure de définition de disque (DDS) du disque.

24. Appareil selon la revendication 23, dans lequel les informations montrant la pluralité de modes de gestion de défauts comprennent des informations indiquant qu'un remplacement glissant et qu'un remplacement linéaire sont appliqués à toutes les données devant être enregistrées dans une zone d'enregistrement du disque, des informations indiquant qu'un remplacement linéaire est appliqué sélectivement en fonction du type de données sur le disque, et des informations indiquant qu'un remplacement linéaire n'est pas appliqué à la totalité des données devant être enregistrées dans la zone d'enregistrement sur le disque.

25. Appareil selon l'une quelconque des revendications 18 à 24, dans lequel, lorsque les informations de gestion de défauts indiquent qu'un enregistrement en temps réel de données est effectué sur le disque, un remplacement linéaire n'est pas effectué par allocation de seulement une zone de réserve pour le remplacement glissant.

26. Appareil selon la revendication 25, dans lequel la zone de réserve destinée au remplacement glissant est allouée à un dernier groupe du disque, et dans lequel les informations de gestion de défauts sont enregistrées dans une zone réservée de chacune d'une structure de définition de disque (DDS) et d'une liste de défauts primaires (PDL) du disque.

27. Appareil selon l'une quelconque des revendications 18 à 26, dans lequel, dans ledit appareil, en réponse à des informations de gestion de défauts indiquant le non-remplacement par remplacement linéaire, ledit appareil commande l'unité d'enregistrement de façon à ce qu'elle n'utilise pas le remplacement linéaire pour des données enregistrées en temps réel sur le disque, et commande l'utilisation d'un remplacement linéaire pour des données enregistrées sur le disque qui sont autres que des données en temps réel.

28. Appareil selon l'une quelconque des revendications 18 à 26, dans lequel ledit appareil, en réponse au fait que les informations de gestion de défauts indiquent le non-remplacement par remplacement linéaire, commande l'unité d'enregistrement afin qu'elle n'utilise pas le remplacement linéaire indépendamment du fait que les données à enregistrer sur le disque sont ou non des données en temps réel.

29. Appareil selon l'une quelconque des revendications 18 à 26, dans lequel ledit appareil commande l'unité d'enregistrement afin d'annuler le remplacement linéaire d'un défaut sur une zone du disque dans laquelle des données doivent être enregistrées en temps réel, en réponse au fait que les informations de gestion de défauts indiquent un non-remplacement par remplacement linéaire.

30. Appareil selon la revendication 29, dans lequel ledit appareil commande ladite unité d'enregistrement afin qu'elle annule le remplacement linéaire en stockant un indicateur stocké en tant que bit réservé dans une liste de défauts secondaires (SDL) et indiquant que le remplacement linéaire a été annulé, ladite unité d'enregistrement stockant des informations indiquant que le bloc défectueux a été remplacé dans un bit de Marquage de Réaffectation Forcée (FRM) de la liste SDL, et en stockant un numéro de secteur de départ du bloc défectueux et un numéro de secteur de départ du bloc de remplacement dans la liste SDL.

31. Appareil selon la revendication 29, dans lequel ladite annulation effectuée par ladite unité d'enregistrement laisse seulement un numéro de secteur de départ du bloc défectueux dans une liste de défauts secondaires (SDL) et dans lequel ladite unité d'enregistrement stocke des informations indiquant que le bloc défectueux n'a pas été remplacé dans un bit de Marquage de Réaffectation Forcée (FRM) de la liste SDL montrant si le bloc défectueux a été remplacé, et stocke des informations indiquant que le bloc défectueux n'a pas été remplacé dans un numéro de secteur de départ du bloc de remplacement dans la liste SDL.

32. Appareil selon l'une quelconque des revendications 18 à 29, dans lequel ledit appareil commande ladite unité d'enregistrement afin qu'elle enregistre seulement un numéro de secteur de départ du bloc défectueux ayant un défaut généré tout en utilisant le disque sur lequel ont été enregistrées les informations de gestion de défauts indiquant qu'un remplacement linéaire ne sera pas utilisé, dans une liste de défauts secondaires (SDL), afin qu'elle enregistre des informations indiquant que le bloc défectueux n'a pas été remplacé dans un bit de Marquage de Réaffectation Forcée (FRM) de la liste SDL montrant si le bloc défectueux a été remplacé, et afin qu'elle enregistre des informations selon lesquelles le bloc défectueux n'a pas été remplacé dans un numéro de secteur de départ du bloc de remplacement dans la liste SDL.

33. Appareil selon l'une quelconque des revendications 18 à 32, dans lequel ledit appareil effectue la gestion de défauts sur la base d'un remplacement linéaire lorsqu'un défaut est généré pendant l'utilisation du disque sur lequel ont été enregistrées les informations de gestion de défauts indiquant qu'un remplacement linéaire sera utilisé.

34. Appareil selon la revendication 1, dans lequel l'appareil est conçu pour enregistrer et/ou reproduire des données en temps réel tout en gérant des défauts sur le disque, comprenant :
une unité d'enregistrement destinée à enregistrer des données dans une zone du disque, ladite unité d'enregistrement enregistrant des données en temps réel dans une partie désignée de cette zone en réponse au fait qu'on a déterminé qu'aucun nouveau défaut n'a été détecté dans la zone, qu'aucun défaut remplacé linéairement n'existe dans la zone, si des informations de mode de gestion de défauts indiquent qu'une gestion de défauts basée sur un remplacement linéaire doit être utilisée, et si les données stockées sur le disque dans cette zone sont des informations en temps réel.

35. Appareil selon la revendication 34, dans lequel l'appareil est conçu pour effectuer une gestion de défauts en réponse au fait que les informations de mode de gestion de défauts sont les informations de gestion de défauts indiquant qu'on doit utiliser le remplacement linéaire et en réponse au fait que les données à enregistrer ne sont pas des données en temps réel.

36. Appareil selon la revendication 34 ou la revendication 35, dans lequel ladite unité d'enregistrement est conçue pour annuler un remplacement linéaire en réponse au fait qu'il existe un défaut remplacé linéairement dans la zone dans laquelle les données doivent être enregistrées.

37. Appareil selon la revendication 36, dans lequel ladite annulation est mise en oeuvre en laissant seulement un numéro de secteur de départ d'un bloc défectueux dans la liste SDL, en stockant des informations indiquant que le bloc défectueux n'a pas été remplacé dans un bit de Marquage de Réaffectation Forcée (FRM) de la liste SDL montrant si le bloc défectueux a été remplacé, et en enregistrant des informations indiquant que le bloc défectueux n'a pas été remplacé dans un numéro de secteur de départ d'un bloc de remplacement dans la liste SDL.

38. Appareil selon la revendication 36, dans lequel ladite annulation est mise en oeuvre en positionnant un indicateur indiquant qu'un remplacement linéaire a été annulé en utilisant un bit réservé de la liste SDL, en stockant des informations indiquant qu'un bloc défectueux a été remplacé dans un bit de Marquage de Réaffectation Forcée (FRM) de la liste SDL, et en enregistrant un numéro de secteur de départ d'un bloc défectueux et un numéro de secteur de départ d'un bloc de remplacement dans la liste SDL.

39. Appareil selon l'une quelconque des revendications 34 à 38, dans lequel ladite unité d'enregistrement est conçue pour enregistrer des informations de gestion de défauts indiquant qu'un remplacement linéaire n'a pas été effectué en réponse au fait qu'un nouveau défaut est détecté.

40. Appareil selon la revendication 39, dans lequel ledit enregistrement d'informations de gestion de défauts indiquant qu'un remplacement linéaire n'a pas été effectué est réalisé en laissant seulement un numéro de secteur de départ d'un bloc défectueux dans la liste SDL, en stockant des informations indiquant que le bloc défectueux n'a pas été remplacé dans un bit de Marquage de Réaffectation Forcée (FRM) de la liste SDL montrant si le bloc défectueux a été remplacé, et en enregistrant des informations indiquant que le bloc défectueux n'a pas été remplacé dans un numéro de secteur de départ d'un bloc de remplacement dans la liste SDL.

41. Appareil selon l'une quelconque des revendications 34 à 40, dans lequel le disque est un disque de mémoire vive sur disque numérique universel (DVD-RAM) ayant une structure de définition de défauts (DDS) et dans lequel les informations de mode de gestion de défauts sont des informations de gestion de défauts indiquant un remplacement ou un non-remplacement par remplacement linéaire pour la totalité du disque et sont stockées dans une zone réservée d'un indicateur de certification de disque dans la structure DDS.

42. Appareil selon l'une quelconque des revendications 34 à 40, dans lequel le disque est un disque de mémoire vive sur disque numérique universel (DVD-RAM) ayant une structure de définition de défauts (DDS), et dans lequel les informations de mode de gestion de défauts sont des informations de gestion de défauts indiquant un remplacement ou un non-remplacement par remplacement linéaire pour seulement certains groupes de données du disque et sont stockées dans une zone réservée d'un indicateur de certification de groupe dans la structure DDS.

43. Appareil selon l'une quelconque des revendications 34 à 42, dans lequel les informations de mode de gestion de défauts comprennent des informations indiquant qu'un remplacement glissant et qu'un remplacement linéaire sont appliqués à toutes les données devant être enregistrées sur le disque, des informations indiquant qu'un remplacement linéaire est appliqué sélectivement en fonction du type de données, ou des informations indiquant qu'un remplacement linéaire n'est pas appliqué à toutes les données devant être enregistrées sur le disque, et dans lequel les informations de mode de gestion de défauts sont stockées dans une zone réservée de la structure DDS.

44. Appareil selon l'une quelconque des revendications 34 à 40, dans lequel le disque est un disque de mémoire vive sur disque numérique universel (DVD-RAM) ayant une structure de définition de défauts (DDS) et une liste de défauts primaires (PDL), et dans lequel les informations de mode de gestion de défauts sont des informations de gestion de défauts indiquant l'utilisation d'une méthode de gestion de défauts uniquement pour un enregistrement en temps réel dans lequel un remplacement linéaire n'est pas utilisé par allocation de la seule zone de réserve destinée au remplacement glissant, et sont stockées dans une zone réservée de la structure DDS et dans une zone réservée de la liste PDL.
